# EUROPÄISCHE PATENTSCHRIFT

(11) **EP 1 276 027 B1**
(45) Veröffentlichungstag und Bekanntmachung des Hinweises auf die Patenterteilung: **09.02.2005**
(21) Anmeldenummer: 02012679.3
(22) Anmeldetag: 07.06.2002
(51) Int. Cl.: G05B 19/4062, G05B 19/4063, G05B 19/4065

(54) **Numerisches Steuergerät mit integrierter Überwachung einer Werkzeugmaschine**
Numerical controller with integrated monitoring of a machine tool
Commande numérique avec surveillance intégrée pour machine-outil

(30) Priorität: 13.07.2001 DE 10133612
(43) Veröffentlichungstag der Anmeldung: 15.01.2003
(73) Patentinhaber: Prometec GmbH, 52070 Aachen (DE)
(72) Erfinder: Kluft, Werner, 52078 Aachen (DE); Hostettler, Friedhelm, 52066 Aachen (DE)
(74) Vertreter: Dallmeyer, Georg, Dipl.-Ing.

(56) Entgegenhaltungen:
- US-A- 5 414 632
- US-A- 5 822 212
- MANFRED WECK, FRITZ KLOCKE, MICHAEL KAEVER, CHRISTIAN WENK, MICHAEL REHSE, HORST GOSE: "Steuerungsintegrierte Überwachung von Fertigungsprozessen" VDI-Z, Bd. 140, Nr. 6, 1998, Seiten 53-57, XP001155374
- KLUFT W: "DIE RICHTIGE STRATEGIE FUER DIE WERKZEUGUEBERWACHUNG" WERKSTATT UND BETRIEB, CARL HANSER VERLAG. MUNCHEN, DE, Bd. 134, Nr. 3, 3. März 2001 (2001-03-03), Seiten 56-59, XP001071519 ISSN: 0043-2792

## Beschreibung

Die Erfindung betrifft eine numerische Steuerung für eine Werkzeugmaschine nach dem Oberbegriff des Anspruchs 1, sowie ein Verfahren zur Überwachung einer Werkzeugmaschine nach dem Oberbegriff des Anspruchs 6.

Aus der US-A-5,414,632 ist eine NC-Steuerung mit Überwachungssoftware bekannt, welche auf Messwerte von Sensoren der Servomotoren zugreift. Das dort beschriebene Verfahren benötigt jedoch zusätzlich einen Micro-Executor zum Vergleich der Messwerte mit Schwellenwerten mittels einer zusätzlichen Firmware als Microprogramm im Compare Block. Darüber hinaus benötigt das Verfahren in dem PC (Programmable Controller) einen Counter, einen Timer und einen weiteren Compare Block.

Die EP-A-0 813 130 beschreibt ein Verfahren, welches ebenfalls ohne additive Sensorik eine steuerungsintegrierte Fertigungsprozessüberwachung bezüglich der Kriterien wie Kollision, Anschnitt, Überlast, Werkzeugbruch oder Werkzeugverschleiß ermöglicht. Jedoch wird zusätzlich ein Umsetzer sowie eine Überwachungsmethoden-Datenbank benötigt. Ferner benötigt das Verfahren umfassende Bedienhandlungen im Dialogbetrieb mit dem Bediener über das Bediengerät. Dabei werden vom Bediener für die Auswahl von Überwachungsstrategien und Überwachungsmethoden umfassende Überwachungskenntnisse vorausgesetzt, die er für die einwandfreie Funktion der Überwachung sicher beherrschen muss, um falsche Reaktionen der Überwachung zu vermeiden.

Die Veröffentlichung "Steuerungsintegrierte Überwachung von Fertigungsprozessen, sensorlose Überwachung auf Basis digitaler Steuerungs- und Antriebsinformationen", VDI-Z 140 (1998), Nr. 6 - Juni, Seite 53-57, beschreibt unter anderem die Entwicklung von externen Überwachungssystemen zu steuerungsintegrierter Überwachung und stellt einen realisierten Prototypen zur steuerungsintegrierten Prozessüberwachung vor. Gemäß diesem Stand der Technik werden entwickelte Softwareprogramme in die beiden Hauptkomponenten der Steuerung, nämlich in den NC-Kern (NCK) und in die Benutzerschnittstelle (Man-Machine-Communication, MMC) eingebracht und dadurch auf die Antriebssignale und die notwendigen Steuerungsinformationen zugegriffen. Hauptziel der im NCK implementierten Zusatzsoftware ist die Schaffung einer aussagefähigen Signalbasis und die effiziente Implementierung von Überwachungsalgorithmen. Im MMC erfolgt die Bedienung für die Überwachung durch ein zusätzliches Programm. Als Basis für die Prototyprealisierung wurde die Steuerung der Firma Siemens vom Typ Sinumerik 840D genutzt, die sowohl im MMC als auch im NCK offen für zusätzliche OEM-Software ist.

Aus der US-A-5,822,212 ist ein Maschinenlastüberwachungssystem bekannt, das den Maschinenzustand durch Vergleichen von zuvor in einem Versuchszerspanungsprozess erfassten Daten einer Maschinenbelastung mit den aktuell gemessenen Daten in einem aktuellen Zerspanungsprozess feststellt, wobei Probleme bei der Synchronisation der Daten des Versuchszerspanungsprozesses und des aktuellen Zerspanungsprozesses überwunden werden. Ziel ist es dabei, die Vergleichbarkeit der Daten auch dann aufrechtzuerhalten, wenn der aktuelle Zerspanungsprozess schneller oder langsamer abläuft als der Versuchszerspanungsprozess.

Der Erfindung liegt die Aufgabe zugrunde, eine numerische Steuerung, sowie ein Verfahren für eine steuerungsintegrierte Werkzeug- und Prozessüberwachung zu schaffen, die ohne zusätzliche Sensoren und Hardware unter ausschließlicher Nutzung der in den Antrieben vorhandenen Sensoren und der in der NC-Steuerung vorhandenen bzw. zur Verfügung gestellten Programmiermöglichkeiten ohne jegliche Zusatzeinrichtungen, wie zusätzliche Sensoren, zusätzliche Hardware, zusätzliche externe Programme oder zusätzliche Speicherbausteine, eine steuerungsintegrierte Überwachung ermöglicht.

Zur Lösung dieser Aufgabe dienen die Merkmale des Anspruchs 1 und 6.

Die Erfindung sieht in vorteilhafter Weise vor, dass zur Werkzeug- und Prozessüberwachung für ein überwachtes Werkzeug oder Werkstück ein in den Steuerungsrechnerteil eingelesenes Auswerteprogramm ausschließlich eine Kombination von mindestens zwei der frei programmierbaren synchronen NC-Programmanweisungen in Verbindung mit den vorhandenen Standard-NC-Sätzen enthält.

Bei dem Verfahren zur numerischen Steuerung von Werkzeugmaschinen mit digitalen Antrieben durch NC-Programme, wobei neben den NC-Programmen mehrere Standard-NC-Sätze und mehrere voneinander unabhängige und vom Anwender frei programmierbare NC-Programmanweisungen bereitgestellt werden, die in einem festen Zeittakt synchron zu der Abarbeitung der NC-Programme ausgewertet werden, kann bei Erfüllung der in den Programmanweisungen enthaltenen Bedingung mindestens ein Steuerbefehl, ein Flagsignal oder eine Aktion ausführt werden. Die im festen Zeittakt gemessenen Werte der Stromaufnahme oder des Drehmomentes der digitalen Antriebe mindestens einer angetriebenen Achse oder Spindel von einem oder mehreren Werkzeugen oder Werkstücken werden von dem Steuerungsrechnerteil zur Verfügung gestellt.

Die Erfindung verwendet ausschließlich eine Kombination von mindestens zwei der frei programmierbaren synchronen NC-Programmanweisungen in Verbindung mit den vorhandenen Standard-NC-Sätzen und den gemessenen Werten der Stromaufnahme oder des Drehmomentes der digitalen Antriebe zur Werkzeug- und Prozessüberwachung eines überwachten Werkzeuges oder Werkstücks.

Dieses Verfahren ermöglicht eine steuerungsintegrierte Überwachung einer Werkzeugmaschine mit digitalen Antrieben, wenn diese eine offene numerische Steuerung aufweist.

Die Erfindung sieht demzufolge vor, dass für die Überwachung von einer numerischen Steuerung bereitgestellte NC-Programmanweisungen verwendet werden, wie sie die Interpolation von NC-Steuerungen zur Verfügung stellen kann. Solche NC-Programmanweisungen sind Softwareaktionen, die synchron zum Bearbeitungsprozess, nämlich synchron zu der Abarbeitung der NC-Programme Befehle ausführen können und dafür keine zusätzliche Software benötigen. Beispielsweise stellt die Steuerung der Firma Siemens vom Typ Sinumerik 840D 16 NC-Programmanweisungen (Synchronaktionen) während des Interpolationstaktes zur Verfügung.

Die Erfindung ermöglicht, ohne zusätzliche Sensoren und ohne zusätzliche Hardware unter ausschließlicher Nutzung der von einer numerischen Steuerung zur Verfügung gestellten, vom Anwender frei programmierbaren NC-Programmanweisungen und unter Nutzung der in den digitalen Antrieben vorhandenen Sensoren eine steuerungsintegrierte Überwachung. Es werden keine zusätzlichen Einrichtung, wie zusätzliche Sensoren, zusätzliche Hardware, zusätzliche externe Programme oder zusätzliche Speicherbausteine benötigt, um die Überwachungsaufgaben durchzuführen.

Mit Hilfe eines in den Steuerungsrechnerteil eingelesenen Auswerteprogramms kann eine Werkzeug- und Prozessüberwachung für ein oder mehrere überwachte Werkzeuge oder Werkstücke erfolgen.

Das Auswerteprogramm enthält hierzu ausschließlich eine Kombination von mindestens zwei der frei programmierbaren synchronen NC-Programmanweisungen in Verbindung mit vorhandenen Standard-NC-Sätzen und vergleicht die mit Hilfe der mindestens zwei programmierbaren NC-Programmanweisungen gelesenen Werte der Stromaufnahme oder des Drehmomentes der digitalen Antriebe mit mindestens einem gespeicherten Werkzeug- und/oder schnittspezifischen Grenzwert oder Sollbereich der Betriebsparameter im festen Zeittakt. In Abhängigkeit des Überwachungsergebnisses kann ein Steuerbefehl, der in einer weiteren NC-Programmanweisung enthalten sein kann, ausgeführt werden. Alternativ kann ein Flagsignal oder eine Aktion, z.B. durch einen Standard-NC-Satz definiert, ausführbar sein. Auf diese Weise können Werkzeug- und Maschinenüberlast oder ein fehlendes Werkzeug detektiert werden. Desweiteren ist auch eine Kollisions- und Kontakterkennung möglich.

Vorzugsweise bestehen die voneinander unabhängigen und von einem Anwender frei programmierbaren NC-Programmanweisungen jeweils aus einem einzigen Bedingungsteil und einem Ausführungsteil.

Die von vorhandenen Sensoren einer Werkzeugmaschine gemessenen Betriebsparameter können das Drehmoment oder die Stromaufnahmewerte des Haupt- oder Vorschubmotorantriebs eines Werkzeugs oder Werkstücks sein und/oder die Vorschubgeschwindigkeit des Werkzeugs oder Werkstücks.

Vorzugsweise ist der feste Zeittakt der Interpolationstakt des Steuerungsrechnerteils.

Mindestens eine der insgesamt zur Verfügung stehenden NC-Programmanweisungen kann zur Definition eines Überwachungsfensters zur Aktivierung der Überwachung verwendet werden. Dadurch können zur Überwachung eines ausgewählten Werkzeugs oder Werkstücks geeignete Phasen der Bearbeitung bestimmt werden und diese Phasen zur Erkennung von Werkzeug- und Maschinenüberlast, sowie zur Erkennung von fehlenden Werkzeugen eingesetzt werden. Damit werden zur Überwachung ungeeignete Phasen der Bearbeitung wie die Beschleunigung, Bremsen sowie Übergang von Haftreibung zu Gleitreibung aus der Überwachung ausgeblendet. Die Auswahl des zu überwachenden Werkzeuges bzw. Schnittes erfolgt durch Aufruf eines NC-Zyklus im NC-Programm vor dem betreffenden Schnitt. Die Abwahl des zu überwachenden Werkzeuges bzw. Schnittes erfolgt durch Abwahl eines NC-Zyklusses im NC-Programm nach dem entsprechenden Schnitt. NC-Zyklen sind NC-Programmteile bzw. NC-Unterprogrammme, die im normalen NC-Bearbeitungsprogramm aufgerufen werden können.

Bei einer besonders bevorzugten Weiterbildung der Erfindung ist vorgesehen, dass die Bearbeitungsvorgänge in werkzeug- und/oder werkstückspezifische Schnitte unterteilt werden und dass mit Hilfe mindestens einer NC-Programmanweisung bei mehreren gleichartigen aufeinanderfolgenden Bearbeitungen durch dasselbe Werkzeug eine automatische Trennung der Überwachung jedes Schnittes desselben Werkzeugs ausgeführt wird.

Beispielsweise werden bei mehreren gleichartig aufeinanderfolgenden Bearbeitungen desselben Werkzeugs mittels Auswertung der Geschwindigkeiten der Vorschubantriebe eine automatische Trennung der Überwachung in einzelne Schnitte vorgenommen.

Die Änderung der Vorschubgeschwindigkeit, die aus Eilgangphasen zwischen den gleichartigen Bearbeitungen bestehen kann, wird als Kriterium für die automatische Trennung der gleichartigen Bearbeitung in unterschiedliche Schnitte verwendet.

Die Maximalwerte der Stromaufnahme oder des Drehmomentes der digitalen Antriebe der zu überwachenden Schnitte eines NC-Programms, die ohne Werkzeug oder ohne Werkstück gemessen werden, können im Teach-in-Verfahren in einen Speicher des Steuerungsrechnerteils eingelesen werden.

Desweiteren können die während der Bearbeitung gemessenen Maximalwerte der der digitalen Antriebe für jeden der zu überwachenden Schnitte eines NC-Programms im Teach-in-Verfahren anhand eines Musterwerkstücks mit arbeitsscharfem Werkzeug in einen Speicher des Steuerungsrechnerteils eingelesen werden.

Die ohne Werkstück oder Werkzeug gemessenen Maximalwerte der Stromaufnahme oder des Drehmomentes werden von den mit Hilfe des Musterwerkstücks gemessenen Maximalwerten subtrahiert und die auf diese Weise berechneten Werte werden als Referenzwerte für die Werkzeug- und Prozessüberwachung zur Festlegung von werkzeug- und/oder schnittspezifischen Grenzwerten oder Sollbereichen der Stromaufnahme oder des Drehmoments verwendet.

Beispielsweise wird durch eine Referenzfahrt ohne Werkzeug bzw. ohne Werkstück das während der zu Überwachung geeigneten Phasen der Bearbeitung auftretende maximale Moment bzw. der maximale Strom, die ausschließlich aus der Bewegung der Achsen resultieren, gespeichert, mit dem Zweck, diesen maximalen Leerlastwert bei später zu überwachenden Bearbeitungen vom aktuell gemessenen Wert zur Kompensation abzuziehen.

Die Überwachung bestimmter Betriebsparameter ermöglicht es desweiteren, den ersten Kontakt zwischen Werkzeug und Werkstück zu erkennen. Die Kontakterkennung wird dann zur Umschaltung der Arbeitsvorschubgeschwindigkeit benutzt, ohne dass der Umschaltzeitpunkt speziell in jedes der NC-Programme einprogrammiert werden müsste.

In dem Bedienungsrechnerteil, der zur Aufnahme weiterer Bedienprogramme offen ist, wird ein Bedienprogramm eingelesen, das alle für die Kennzeichnung und Auswertung der Überwachung wichtigen Bedienelemente auf einer einzigen Bildschirmseite anzeigt.

Die Erfindung sieht in vorteilhafter Weise vor, dass für die Überwachung NC-Programmanweisungen verwendet werden, wie sie die Interpolation von NC-Steuerungen in der Regel zur Verfügung stellt. Solche NC-Programmanweisungen sind Softwareaktionen, die synchron zum Bearbeitungsprozess Vorgänge abarbeiten können und dafür keine zusätzliche Software benötigen. So stellt z.B. die Steuerung vom Typ Sinumerik 840D derzeit 16 NC-Programmanweisungen für die Interpolation standardmäßig zur Verfügung .

Im folgenden wird unter Bezugnahme auf die Zeichnungen die Erfindung näher erläutert.

Es zeigen:

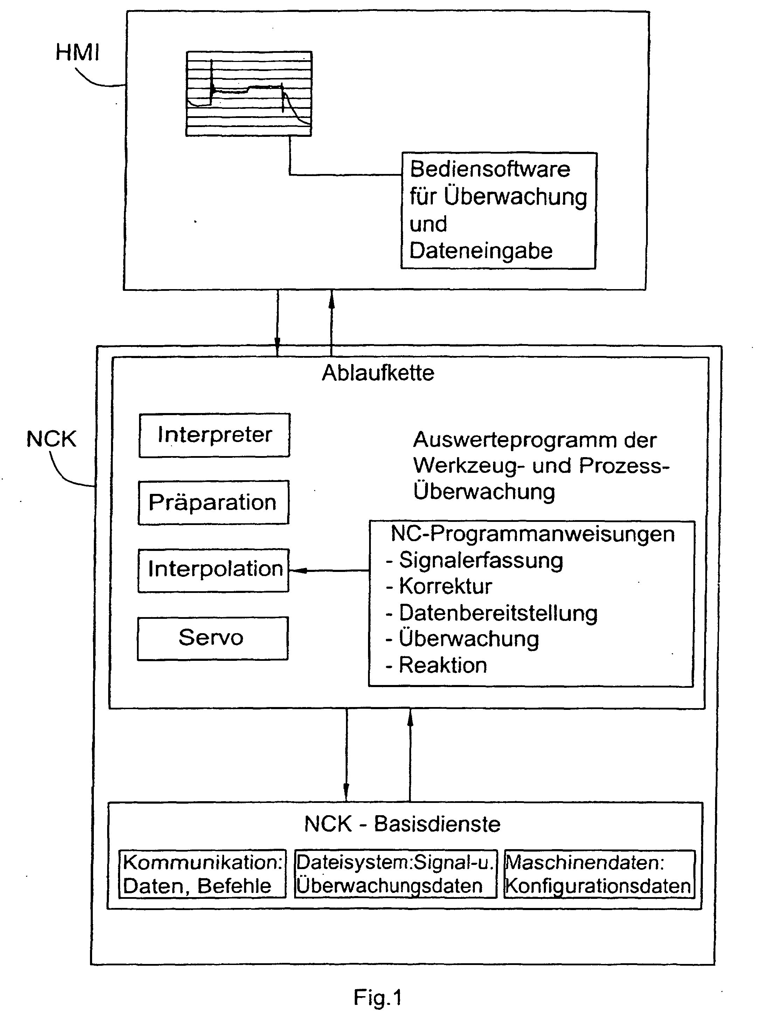

- Fig. 1: die Struktur einer numerischen Steuerung,
- Fig. 2: die Verknüpfung von NC-Programmanweisungen,
- Fig. 3: eine schematische Darstellung der NC-Programmanweisungen,
- Fig. 4: die Stromaufnahme einer Vorschubachse bei Bohrbearbeitung durch einen 3,2 mm Bohrer in Aluminium,
- Fig. 5: eine Bedienungsoberfläche des Bedienprogramms, und
- Fig. 6: in dem Bedienprogramm eingebbare Grenz- und Schwellwerte bzw. Sollbereiche.

Bei einem Fertigungsprozess mit einer Werkzeugmaschine ist der sichere und zuverlässige Betrieb eine wichtige Voraussetzung für eine wirtschaftliche Produktion. Der Betrieb einer Werkzeugmaschine kann durch Werkzeugüberlast oder Werkzeugbruch oder Kollision gestört werden. Daher ist bei dem Betrieb einer Werkzeugmaschine die automatische Erkennung von Prozessstörungen mit Hilfe eines Werkzeug- und Prozessüberwachungssystems von großer Bedeutung. Numerische Steuerungen für Werkzeugmaschinen mit digitalen Antrieben erlauben den Zugriff auf die Strom- oder Drehmomentsignale und Vorschubsignale der digitalen Antriebe und die Verknüpfung mit NC-Satz- und Steuerdaten. Dies ermöglicht, auch Prozessüberwachungsfunktionen in die numerische Steuerung zu integrieren. Derartige steuerungsintegrierte Werkzeug- und Prozessüberwachungssysteme haben gegenüber bisher bekannten Prozessüberwachungssystemen den Vorteil, dass eine Überwachung ohne den Einsatz von zusätzlichen, nachträglich zu installierenden Sensoren oder sonstiger zusätzlicher Hardware möglich ist.

Das hier beschriebene Werkzeug- und Prozessüberwachungssystem verwendet numerische Steuerungen, die einen Bedienungsrechnerteil HMI (Human Machine Interface) aufweisen, der mindestens ein Bedienprogramm enthält und zur Aufnahme weiterer Bedienprogramme offen ist. Für die Integration der Werkzeug- und Prozessüberwachung kann daher ein Bedienprogramm in den Bedienungsrechnerteil HMI eingelesen werden.

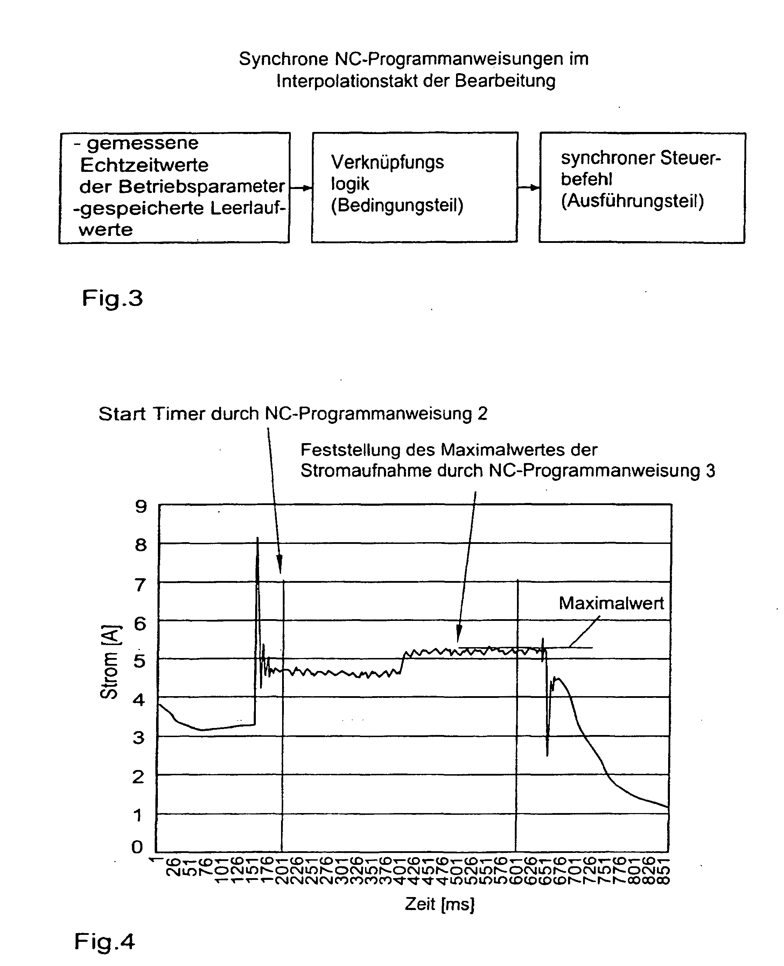

Die numerische Steuerung weist ferner einen Steuerungsrechnerteil NCK (Numerical Control Kernel) auf, der NC-Programme zur Steuerung einer Werkzeugmaschine enthält. Die Bearbeitungsvorgänge sind dabei in werkzeug- und/oder werkstückspezifische Schnitte unterteilt. Desweiteren stehen mehrere Standard-NC-Sätze zur Verfügung, die in Verbindung mit mehreren voneinander unabhängigen und vom Anwender frei programmierbaren NC-Programmanweisungen in einem festen Zeittakt, vorzugsweise dem Interpolationszeittakt, synchron zu der Abarbeitung der NC-Programme abgearbeitet werden. Bei Erfüllung der in dem Programmanweisungen enthaltenen Bedingungen wird synchron mindestens ein Befehl abgearbeitet. Die NC-Programmanweisungen enthalten vorzugsweise nur eine einzige Bedingung und einen Ausführungsteil, wie am besten aus Fig. 3 ersichtlich ist.

Die in dem Interpolationstakt gemessenen Werte der Betriebsparameter der digitalen Antriebe von einer oder mehreren Achsen oder Spindeln werden an einer Schnittstelle für die NC-Programmanweisungen zur Verfügung gestellt.

Für die Werkzeug- und Prozessüberwachung der überwachten Werkzeuge oder Werkstücke wird in den Steuerungsrechnerteil NCK ein Auswerteprogramm eingelesen. Das Auswerteprogramm enthält ausschließlich eine Kombination von mindestens zwei der frei programmierbaren synchronen NC-Programmanweisungen in Verbindung mit den vorhandenen Standard-NC-Sätzen, sowie die im Interpolationstakt zur Verfügung gestellten Werte der Betriebsparameter.

Mit Hilfe der NC-Programmanweisungen wird der gemessene Wert der Stromaufnahme oder des Drehmomentes mit einem gespeicherten werkzeug- und/oder schnittspezifischen Grenzwert oder Sollbereich verglichen und in Abhängigkeit des Vergleichsergebnisses im Ausführungsteil beispielsweise ein in einer weiteren NC-Programmanweisung enthaltener Steuerbefehl ausgeführt, oder ein Flagsignal gesetzt oder ein Standard-NC-Satz abgearbeitet.

Der gemessene Betriebsparameter kann das Drehmoment oder die Stromaufnahmewerte des Haupt- oder Vorschubmotorantriebs eines Werkzeugs oder Werkstücks und/oder die Vorschubgeschwindigkeit des Werkzeugs oder Werkstücks sein.

Fig. 4 zeigt die Stromaufnahmewerte einer Vorschubspindel für ein Bohrwerkzeug. Die Stromwerte werden im Interpolationstakt gemessen und zur Verfügung gestellt.

Im folgenden werden insgesamt 14 NC-Programmanweisungen und 3 NC-Zyklen beschrieben, die in vorteilhafter Weise miteinander zur Werkzeug- und Prozessüberwachung kombiniert werden können, so dass weder zusätzliche Sensoren noch zusätzliche Hardware oder externe Software erforderlich ist, um eine steuerungsintegrierte Werkzeug- und Prozessüberwachung zu ermöglichen.

Derzeit existieren numerische Steuerungen, die standardmäßig 16 von dem Anwender frei programmierbare NC-Programmanweisungen zur Verfügung stellen.

### Beschreibung der NC-Zyklen

### 1. NC-Zyklus zum Vorbesetzen des Variablenspeichers der NC

Dieser Zyklus setzt im für die Werkzeugüberwachung deklarierten Speicherbereich der NC die Namen der zur Überwachung benutzten Spindeln/Achsen und für die NC-Steuerung wichtige Systemparameter vor. Der Zyklus wird nur einmal zum Zeitpunkt der Inbetriebnahme aktiviert.

### 2. NC-Zyklus zur Auswahl des Schnittes und zur Aktivierung der NC-Programmanweisungen

Dieser Zyklus wird im NC-Programm zur Aktivbierung der Überwachung eines Schnittes angeboten. Er stellt die Verbindung zwischen den in der Bedienoberfläche eingestellten Werten und Reaktionen und der Überwachung dar. Als Übergabeparameter wird die Schnittnummer angegeben. Die Nummer wird in einem NC-Parameter als aktuell überwachter Schnitt gespeichert.

Als weiterer Übergabeparameter kann ein Geschwindigkeits-Grenzwert angegeben werden. Die Überwachung erfolgt nur während Vorschubgeschwindigkeiten unterhalb dieses Grenzwertes. Wird kein Wert angegeben, so wird dazu ein Standardwert herangezogen.

Zunächst werden bei eingeschalteter Überwachung in jedem Falle die NC-Programmanweisungen zur Ermittlung des Maximalwertes (Programmanweisungen 1-3) aktiviert. Wenn noch kein 100%-Wert erfaßt wurde (Teach-In), wird der Zyklus danach beendet.

Ansonsten werden je nach vom Bedienprogramm für den Schnitt angewählter Achse bzw. Spindel, Reaktionen und Grenzwerte die in den NC-Programmanweisungen beschriebenen Merker zurückgesetzt und die entsprechenden synchronen NC-Programmanweisungen (4-14) aktiviert.

Zuletzt werden die im Bedienprogramm eingestellten Prozentwerte der Limits basierend auf den 100% Werten in entsprechende Stromwerte umgerechnet und als Schwellen den NC-Programmieranweisungen zur Verfügung gestellt.

### 3. Zyklus zur Abwahl des Schnittes und zur Deaktivierung der NC-Programmanweisungen

Dieser Zyklus speichert von der Überwachung festgestellte Werte um, leitet Reaktionen, die nicht synchron zur Bearbeitung erfolgen ein und deaktiviert alle synchronen NC-Programmanweisungen der Überwachung.

Zuerst wird der ermittelte Maximalwert (NC-Programmanweisung 3) gesichert. Lag vor der Überwachung bereits ein 100%-Wert vor, so wird der Maximalwert in eine Variable zur Anzeige des letzten Istwertes gespeichert. Lag noch kein Leerlaufwert vor, so wird der ermittelte Maximalwert als Leerlaufwert gespeichert. Lag ein Leerlaufwert, aber bisher kein 100%-Wert vor, so wird der ermittelte Maximalwert als 100%-Wert gespeichert.

Bei Überwachung der unteren Schwelle ist keine Reaktion synchron zur NC-Bearbeitung notwendig. Der Zyklus wertet am Ende der Überwachung aus, ob die untere Schwelle überschritten wurde. Wurde sie nicht überschritten, so wird die entsprechende Reaktion (Stillsetzen der Achse und/oder Ausgabe einer Alarmmeldung) eingeleitet.

Danach werden die synchronen NC-Programmanweisungen deaktiviert. Damit ist die Überwachung bis zur erneuten Aktivierung eines Schnittes beendet.

Der NC-Parameter mit der aktuell überwachten Schnittnummer wird zurückgesetzt.

### Beschreibung der NC-Programmanweisungen

### 1. Werteerfassung

### 1.1 NC-Programmanweisung 1

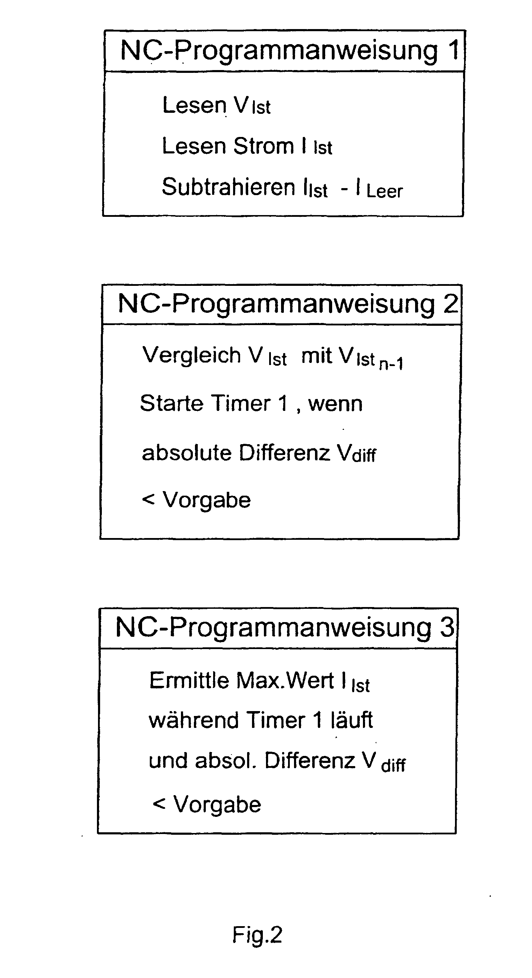

Die NC-Programmanweisung erfasst die Ist-Geschwindigkeit V_{IST} der überwachten Achse und legt den Wert in einen Speicherplatz der NC ab. Weiter erfasst sie den Strom der Achse I_{IST} und zieht den Leerlaufwert I_{Leer} ab (Fig. 2).

### 1.2 NC-Programmanweisung 2

Die NC-Programmanweisung startet ein Zeitglied (Timer 1), sobald der aktuelle und der letzte Ist-Geschwindigkeitswert eine Differenz kleiner als eine im Programm voreingestellte Zeit annimmt (Fig. 2).

### 2. Maximalwert ermitteln

### 2.1 NC-Programmanweisung 3

Wenn der aktuelle Stromwert I_{IST} größer als der bisherige Maximalwert ist und die Voraussetzungen, dass die Achse sich für eine vom Programm voreingestellte Mindestzeit (Timer 1 aus NC-Programmanweisung 2) mit konstanter Geschwindigkeit bewegt und die Geschwindigkeit kleiner als eine per Programm oder Schnittaktivierung voreingestellte Grenzgeschwindigkeit (Feedlimit)" ist, erfüllt sind, so wird der aktuelle Wert zum Maximalwert (Fig. 2). Zusätzlich wird dieser Wert für die Anzeige im Bedienprogramm (umgerechnet in Prozent, bezogen auf den beim Teach-In ermittelten Wert) gespeichert.

### 3. Überlast (Oberes Limit)

### 3.1 NC-Programmanweisung 4

Sobald der aktuelle Stromwert größer als die vom Aktivierungszyklus errechnete obere Schwelle ist und die Voraussetzungen, dass die Achse sich für eine vom Programm voreingestellte Mindestzeit (Timer 1 aus NC-Programmanweisung 2) mit konstanter Geschwindigkeit bewegt und die Geschwindigkeit kleiner als das vorgegebene "Feedlimit" ist, erfüllt sind, so wird ein zweites Zeitglied (Timer 2) gestartet.

### 3.2 NC-Programmanweisung 5

Wenn durch den in NC-Programmanweisung 4 gestarteten Timer 2 eine im Programm voreingestellte Zeitabgelaufen ist und der Strom die obere Schwelle immer noch überschreitet, wird die gewünschte Reaktion (in diesem Fall Stillsetzen der Achse und Ausgabe einer Alarmmeldung) ausgelöst.Es wird ein Reaktionsmerker für die Überlast gesetzt und die Schnittnummer in einem Speicher für das Bedienprogramm hinterlegt.

### 3.3 NC-Programmanweisung 14

Wenn die in NC-Programmanweisung 4 gestartete Zeit größer 3 Sekunden ist und der Haltemerker gesetzt ist, wird die zur angewählten Achse zugehörige Spindel still gesetzt (Freischneidezeit).

Die NC Programmanweisungen 4,5 und 14 werden nur aktiviert, wenn beim Überlast Limit als Reaktion "Sofort Halt" eingegeben wurde. Bei Reaktion "Meldung" entfällt die Aktivierung der NC-Programmanweisung 14 und in NC-Programmanweisung 5 wird nur die Ausgabe einer Alarmmeldung vorgenommen. Bei Reaktion "keine" werden keine der NC-Programmanweisungen 4,5 und 14 aktiviert.

### 4. Vorwarnlimit

### 4.1 NC-Programmanweisung 6

Sobald der aktuelle Stromwert größer als die vom Aktivierungszyklus errechnete Vorwarnschwelle ist und die Voraussetzungen, dass die Achse sich für eine vom Programm voreingestellte Mindestzeit (Timer 1 aus NC-Programmanweisung 2) mit konstanter Geschwindigkeit bewegt und die Geschwindigkeit kleiner als das vorgegebene "Feedlimit" ist, erfüllt sind, so wird ein drittes Zeitglied (Timer 3) gestartet.

### 4.2 NC-Programmanweisung 7

Sobald die in NC-Programmanweisung 6 gestartete Zeit abgelaufen ist und der Reaktionsmerker für die Überlast aus NC-Programmanweisung 5 nicht gesetzt ist und der Strom die vorwarnschwelle, immer noch überschreitet, wird die gewünschte Reaktion (Alarmmeldung) ausgelöst. Der Reaktionsmerker für die Vorwarnung wird gesetztund die Schnittnummer in einem Speicher für das Bedienprogramm hinterlegt.

Die NC Programmanweisungen 6 und 7 werden nur aktiviert, wenn beim Vorwarn-Limit als Reaktion "Meldung" eingegeben wurde. Bei Reaktion "keine" werden keine der NC-Programmanweisungen 6 und 7 aktiviert.

### 5. Kontakterkennung

### 5.1 NC-Programmanweisung 8

Wenn der aktuelle Stromwert größer als die untere Schwelle ist und die Voraussetzungen, daß die Achse sich für eine vom Programm voreingestellte Mindestzeit (Timer 1 aus NC-Programmanweisung 2) mit konstanter Geschwindigkeit bewegt und die Geschwindigkeit kleiner dem vorgegebenen "Feedlimit" ist, erfüllt sind, so wird der Reaktionsmerker für Kontakt gesetzt und ein viertes Zeitglied (Timer 4) gestartet. Der Reaktionsmerker für Kontakt kann dann im normalen Ablauf des NC-Programms abgefragt werden und das Ergebnis der Abfrage kann z.B. zur Umschaltung von Vorschubgeschwindigkeiten (Gap Control bei Schleifen) benutzt werden.

### 5.2 NC-Programmanweisung 9

Wenn der Strom unter die untere Schwelle sinkt und der Kontaktmerker gesetzt ist, wird der Reaktionsmerker für Kontakt zurückgesetzt, falls der durch den in NC-Programmanweisung 8 gestartete Timer 4 mit einer im Programm voreingestellten Zeit abgelaufen ist.

Die NC Programmanweisungen 8 und 9 werden nur aktiviert, wenn bei Unteres Limit als Reaktion "wenn Kontakt, dann Vorschub umschalten" eingegeben wurde. Bei anderen Reaktionen werden keine der NC-Programmanweisungen 8 und 9 aktiviert.

### 6. Unteres Limit

### 6.1 NC-Programmanweisung 10

Sobald die Voraussetzungen, dass die Achse sich für eine Mindestzeit (Timer 1 aus NC-Programmanweisung 2) mit konstanter Geschwindigkeit bewegt und die Geschwindigkeit kleiner als das vorgegebene "Feedlimit" ist, erfüllt sind, so wird ein Interner Merker für Leerschnitt " gesetzt.

### 6.2 NC-Programmanweisung 11

Wenn der von NC-Programmanweisung 10 gesetzte Interne Merker für Leerschnitt noch gesetzt ist und die Achse mit einer Geschwindigkeit größer "Feedlimit" fährt, so wird die gewählte Reaktion (in diesem Fall Stillsetzen der Achsen und Meldung) ausgelöst.Der Reaktionsmerker für Leerschnitt wird gesetzt und die Schnittnummer in einem Speicher für das Bedienprogramm hinterlegt.

### 6.3 NC-Programmanweisung 12

Sobald der aktuelle Stromwert größer ist als die vom Aktivierungszyklus berechnete untere Schwelle, und die Voraussetzungen, dass die Achse sich für eine Mindestzeit (Timer 1 aus NC-Programmanweisung 2) mit konstanter Geschwindigkeit bewegt und die Geschwindigkeit kleiner als das vorgegebenen "Feedlimit" ist, erfüllt sind, wird ein viertes Zeitglied (Timer 4) gestartet.

### 6.4 NC-Programmanweisung 13

Wenn durch den in NC-Programmanweisung 12 gestarteten Timer 4 eine im Programm voreingestellte Zeit abgelaufen ist und der Strom die untere Schwelle immer noch überschreitet, wird der Interne Leerschnitt Merker zurückgesetzt.

Die NC Programmanweisungen 10 bis 13 werden nur aktiviert, wenn beim Unteren Limit als Reaktion "wenn Schnitt fehlt, Halt" eingegeben wurde. Bei Reaktion "Meldung" wird in NC-Programmanweisung 11 nur die Ausgabe einer Alarmmeldung vorgenommen. Bei Reaktion "keine" werden keine der NC-Programmanweisungen 10 bis 13 aktiviert. Die Realisierung der automatischen Schnitttrennung bei mehreren aufeinanderfolgenden gleichartigen Bearbeitungen durch dasselbe Werkzeug werden durch die NC-Programmanweisungen 10 und 11 durchgeführt. Wird beim Aufruf des Aktivierungszyklus eine automatische Schnitttrennung nicht gewünscht, so werden die NC-Programmanweisungen 10 und 11 nicht aktiviert. Die Ausgabe der Alarmmeldung erfolgt durch den Abwahlzyklus des Schnittes.

Fig. 2 zeigt als Beispiel eine Verknüpfung der Programmanweisungen 1, 2 und 3, die verwendet werden, um in der Abbildung gemäß Fig. 4 ein Zeitfenster zu definieren, in dem der Maximalwert der Stromaufnahme einer Achse oder Spindel eines digitalen Antriebs ermittelt wird.

In der NC-Programmanweisung 1 wird zunächst der Vorschub-Ist-Wert V_{IST} und der Strom-Ist-Wert I_{IST} gelesen und anschließend ein vorher ohne Werkstück oder ohne Werkzeug ermittelter Stromaufnahmewert der angetriebenen Achse oder Spindel von dem aktuellen Stromaufnahmewert I_{IST} abgezogen.

In der NC-Programmanweisung 2 wird der aktuelle Vorschubwert V_{IST} mit dem Vorschubwert des vorangegangenen Interpolationstaktes verglichen und ein Timer gestartet, wenn die absolute Differenz kleiner ist als eine zuvor gespeicherte Vorgabe. Der Timer läuft über eine zuvor gespeicherte Zeitspanne von beispielsweise 10 bis 500 ms.

In der NC-Programmanweisung 3 wird der maximale Stromaufnahmewert I_{IST} ermittelt, während der Timer läuft und die weitere Bedingung erfüllt ist, dass die absolute Differenz der Vorschubgeschwindigkeiten aufeinanderfolgender Interpolationstakte kleiner ist als die gespeicherte Vorgabe.

Alle 14 NC-Programmanweisungen werden parallel zum normalen NC-Programm abgearbeitet.

Die lediglich mit Hilfe eines Software-Programms in die numerische Steuerung integrierte Werkzeug- und Prozessüberwachung kann mit Hilfe der NC-Programmanweisungen Maschinen- bzw. Werkzeugkollision gebrochene oder fehlende Werkzeuge, z.B. Spiralbohrer, Gewindeschneider, Reibwerkzeuge u.s.w. melden oder stumpfe Werkzeuge erkennen oder sogar zur Kontakterkennung herangezogen werden. Im Falle der Kontakterkennung kann eine schnelle Vorschubgeschwindigkeit in eine normale Bearbeitungsgeschwindigkeit umgeschaltet werden.

Das in den Steuerungsrechnerteil NCK eingelesene aus den NC-Programmanweisungen und Standard-NC-Sätzenbestehenden Auswerteprogramm überwacht den Bearbeitungsprozess, indem es die auftretenden Belastungswerte der Motoren aus den digitalen Antrieben der Steuerung, vorzugsweise in Form der Strom-Ist-Werte ausliest.

Jede NC-Programmanweisung enthält in ihrem Bedienungsteil und/oder Ausführungsteil Standard-NC-Sätze und kann die im Interpolationstakt aktualisierten Betriebsparameter aus NCK-Speichern auslesen.

Bricht z.B. ein Werkzeug, sinkt der Strom-Ist-Wert, während bei einem fortgeschrittenen Werkzeugverschleiß der Strom-Ist-Wert erhöht ist. Das Auswerteprogramm erkennt die Veränderungen anhand von zuvor gelernten Vergleichswerten einer normalen Bearbeitung und liefert entweder Meldungen oder schaltet den Antrieb ab, je nach dem welche Reaktion in dem Ausführungsteil einer NC-Programmanweisung einprogrammiert ist.

Um die werkzeug- und/oder schnittspezifischen Grenzwerte oder Sollbereiche (Limits) der überwachten Betriebsparameter einfacher definieren zu können, wird ihr Wert über einen Prozent-Wert festgelegt, der sich an dem Messsignal bei normaler Bearbeitung mit arbeitsscharfen Werkzeug orientiert. Bei arbeitsscharfem Werkzeug wird also das maximale Messsignal für jeden Schnitt auf 100 % normiert. Dies geschieht automatisch durch das sogenannte Teach-in bei der Bearbeitung eines ersten Werkstückes eines Loses unter Übergabe von Schnittnummem aus dem NC-Programm.

Die einzelnen Limits orientieren sich an diesem 100 %-Signal und liegen je nach Limit-Typ zwischen 0 und 300 %, also oberhalb oder unterhalb des 100 % Normalsignals.

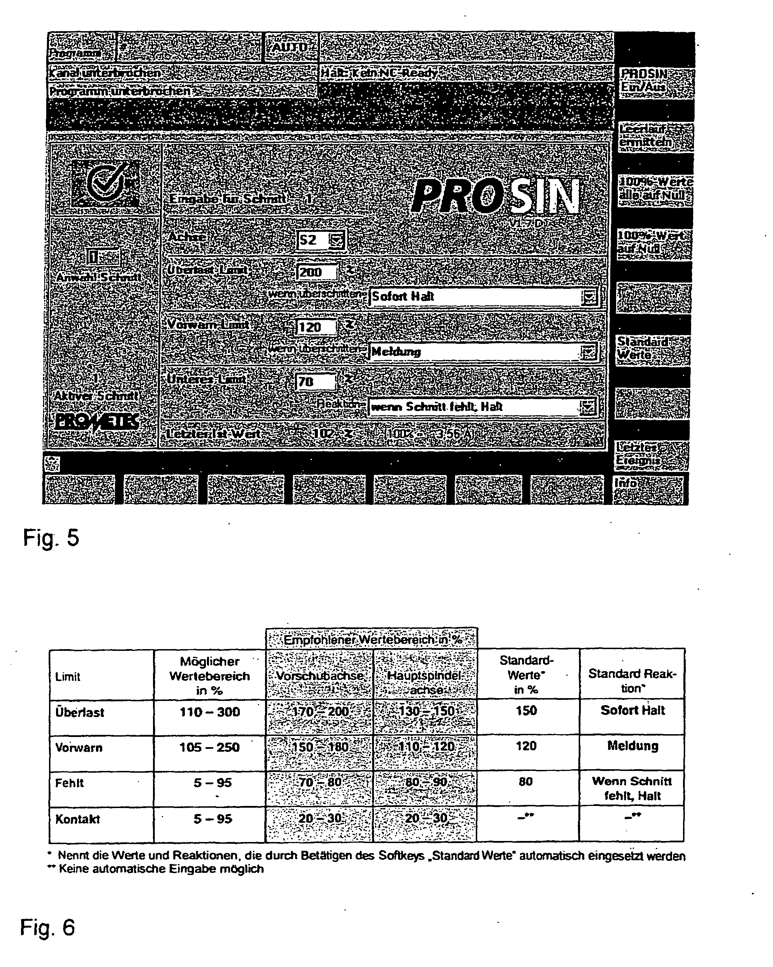

Fig. 6 zeigt eine Übersicht über verschiedene Limit-Kriterien, sowie die möglichen diesen Kriterien zugeordneten Wertebereiche und insbesondere die empfohlenen Wertebereiche.

Desweiteren können der Fig. 6 in der letzten Spalte Beispiele für die in dem Ausführungsteil einer NC-Programmanweisung enthaltenen Steuerbefehle entnommen werden.

Die NC-Steuerung SINUMERIK 840 D verfügt über mehrere voneinander unabhängige und vom Anwender frei programmierbare NC-Programmanweisungen zur Ausführung von Aktionen, die synchron zum NC-Programm abgearbeitet werden können und auch "Synchronaktionen" genannt werden. Diese stehen standardmäßig in begrenztem aber für den erfindungsgemäßen Zweck in ausreichendem Umfang aus der Interpolation dieser NC-Steuerung NCK heraus lizenzfrei zur Verfügung.

Die in dieser Beschreibung erläuterten 14 NC-Programmanweisungen werden in diesem Beispiel der SINUMERIK 840 D in Form der von Anwender zu programmierenden Synchronaktionen realisiert.

Die Fig.5 zeigt die Bedienoberfläche wie sie beispielsweise für den Bedienungsrechnerteil HMI einer offenen NC-Steuerung vom Typ SINUMERIK 840 D von Siemens geschaffen wurde, um zur Werkzeug- und Prozessüberwachung schnittspezifische Überwachungsparameter wie z.B. Grenzwerte vorgeben zu können. Ferner werden mit dieser Bedienoberfläche die Teach-In-Prozesse zur Ermittlung von Normalbelastungswerten gestartet und Steuerbefehle entsprechend dem Überwachungsergebnis festgelegt.

Die Bedienoberfläche gliedert sich in vier Bereiche: Betriebszustand, Schnittnummer, Überwachungsparameter und Softkeys.

Über das Softkey "PROSIN Ein/Aus" ist die gesamte Überwachung ein- und ausschaltbar, was über das Symbol im Bereich "Betriebszustand" angezeigt wird.

Im Bereich "Schnittnummer" wird im Feld "Aktiver Schnitt" die Schnittnummer angezeigt, welche gerade vom NC-Programm angesprochen und überwacht wird. Im Feld "Anwahl" ist die Schnittnummer vorgebbar, zu der man im Bereich "Überwachungsparameter" die Überwachungsparameter eingeben oder ändern will.

Im Bereich "Softkeys" werden neben dem o.g. Ein- und Ausschalten der Überwachung die Softkeys der Steuerung dazu benutzt, z.B. über "100%-Werte auf Null" den 100%-Stromwert des angewählten Schnittes oder über "100%-Werte alle auf Null" die 100%-Stromwerte aller vorgegebenen Schnitte zu ermitteln und zu speichern. Mit Betätigung einer der beiden Tasten werden die aktuellen 100%-Stromwerte auf Null gesetzt und bei der anschließenden Bearbeitung in allen Schnitten bei denen der 100%-Stromwert Null ist, der jeweils neu ermittelte Strom-Istwert unter Abzug der jeweiligen Stromleerlaufwerte übernommen und als neuer 100%-Stromwert gespeichert. Zuvor können über den Softkey "Leerlauf ermitteln" auch diese erneut nach selbigem Verfahren festgelegt werden, indem bei der anschließenden Bearbeitung ohne Werkzeug bzw. ohne Werkstück bei einem oder bei allen Schnitten die zu Null gesetzten Stromleerlaufwerte von neuen Stromleerlaufwerten überschrieben werden.

Die 100%-Stromwerte werden im Bereich "Überwachungsparameter" rechts neben dem Feld "Letzter Ist-Wert" angezeigt, z.B. (100%= 3,56A), was bedeutet, dass der 100%-Stromwert, z.B. beim Bohren eines Loches mit einem neuen, arbeitsscharfen Bohrer, bei der angewählten Schnittnummer 3,56 Ampere war.

Nachdem ein entsprechender Schnitt im Bereich "Schnittnummer" angewählt wurde, lässt sich im Bereich "Überwachungsparameter" für die angewählte bzw. eingegebene Schnittnummer die zu überwachende Achse, z.B. die Vorschubachse X festlegen. Dies könnte aber auch eine andere Vorschubachse oder eine Hauptspindel z.B. Hauptspindelachse S sein. Die Wahl von Vorschubachsen entsprechen dem Überwachen der Ströme der Vorschubantriebe und damit praktisch dem Überwachen der Vorschubkräfte während bei der Wahl der Hauptspindel deren Strom überwacht wird, der dem Drehmoment der Spindel entspricht. So können z.B. Schnitte von Gewindeschneidwerkzeuge wahlgemäß besser mit dem Strom bzw. Moment der Hauptspindel überwacht werden, da ihnen naturgemäß eine Vorschubkraft fehlt, für andere Werkzeuge hingegen könnte der Strom bzw. die Vorschubkraft der Achse eines Vorschubmotors von Vorteil sein.

Das Ausführungsbeispiel verfügt gemäß dem Bereich Überwachungsparameter über drei Grenzwerte, den sogenannten Limits, nämlich dem Überlast-Limit, dem Vorwarn-Limit und dem sogenannten Unteres-Limit. Zu diesen drei Limits gehören Eingabefelder für Werte in der Wertskala in % in Bezug zu dem 100%-Stromwert des Schnittes und jeweils ein Pull-Down-Feld zur Wahl bzw. Einstellung des Steuerbefehls bei entsprechender bestimmungsgemäßer Verletzung des Limits.

Die Eingabe der Werte für die Limits und die zu überwachende Achse erfolgt über den Cursorblock und den Zahlenblock des NC-Bedienteils und die Auswahl der Reaktionen in den Pull-Down-Feldern ausschließlich mit dem Cursorblock.

Für die drei Limits stehen empfohlene Werte (Fig.6) für die Vorschub- und Hauptspindelachsen im Speicher des NC-Bedienteiles zur Verfügung, die über den Softkey "Standard Werte" automatisch als Limitwerte übernommen werden können. Eine spätere Anpassung ist über den Cursorblock und den Zahlenblock des NC-Bedienteiles möglich.

Mit dem Überlast-Limit wird ein Grenzwert von z.B. 200% festgelegt, mit dem eine eventuell auftretende Überlast, die größer als der Grenzwert ist, ausgedrückt durch den Strom-Istwert von mehr als 200% bezogen auf den 100%-Wert, im überwachten Schnitt zu einer Reaktion führt. Als Reaktion wäre bei Überscheitung dieses Überlast-Limit z.B. ein "Sofort Halt", "Keine Reaktion" oder "Meldung" möglich. Bei der Vorgabe "Sofort Halt" wird die Maschine zum sofortigen Stillstand aller Achsen veranlasst, während bei der Vorgabe "Meldung" eine Meldung im Header der Steuerung erscheint, die vom Einrichter/Programmierer der Steuerung zu einer beliebigen Reaktion der Werkzeugmaschine z.B. über das PLC-Programm genutzt kann.

Mit dem Vorwarn-Limit wird ein Grenzwert von z.B. 120% festgelegt, mit dem eine eventuell auftretende Überlast, die größer als der Grenzwert ist, ausgedrückt durch den Strom-Istwert von mehr als 120% bezogen auf den 100%-Wert, im überwachten Schnitt zu einer Reaktion führt. Als Reaktion wäre bei Überscheitung dieses Vorwarn-Limit z.B. eine "Meldung" oder "Keine Reaktion" möglich. Bei der Vorgabe "Meldung" erscheint eine Meldung im Header der Steuerung, die vom Einrichter/Programmierer der Steuerung zu einer beliebigen Reaktion der Werkzeugmaschine z.B. über das PLC-Programm genutzt kann.

Bei dem Feld "Unteres Limit" wird ein Grenzwert von z.B. 70% festgelegt, mit dem eine eventuell auftretende Last die größer als dieser Grenzwert ist oder die kleiner als dieser Grenzwert bis zum Schnittende bleibt ausgedrückt durch den Strom-Istwert bezogen auf den 100%-Wert, im überwachten Schnitt zu einer der beiden Reaktionen führt, die von der gewählten Reaktion abhängt:

Wenn als Reaktion "wenn Schnitt fehlt, Halt" gewählt ist, dann gilt das Limit definitionsgemäß als ein sogenanntes Fehlt-Limit und es wird dann, wenn das Limit bis zum Ende des Schnittes nicht überschritten wurde, eine Meldung in den Header der Steuerung geschrieben, die vom Einrichter/Programmierer der Steuerung zu einer beliebigen Reaktion der Werkzeugmaschine z.B. über das PLC-Programm genutzt werden kann. Eine übliche Programmierung in diesem Fall wäre, die Werkzeugmaschine anzuhalten und die Meldung "Werkzeugbruch" oder "Werkzeug bzw. Werkstück fehlt" auszugeben, bzw. das Werkzeug automatisch zu wechseln und die Bearbeitung automatisch fortzusetzen.

Wenn als Reaktion "wenn Kontakt, Vorschub umschalten" gewählt ist, dann gilt das Limit definitionsgemäß als ein sogenanntes Kontakt-Limit und es wird dann, wenn das Limit überschritten wurde unmittelbar eine Meldung in den Header der Steuerung geschrieben, die vom Einrichter/Programmierer der Steuerung zu einer beliebigen Reaktion der Werkzeugmaschine z.B. über das PLC-Programm genutzt kann. Eine übliche Programmierung in diesem Fall wäre, die Vorschubgeschwindigkeit der Werkzeugmaschine von einer hohen Luftvorschubgeschwindigkeit auf die normale Vorschubgeschwindigkeit umzuschalten und die Meldung "Werkzeug im Schnitt" oder "Werkzeug mit Werkstück in Kontakt" auszugeben.

Als weitere Reaktion des "Unteres Limit" ist "keine Reaktion" vorgesehen, wobei die Werkzeugmaschine, wie bei den anderen zwei vorgenannten Limits auch, keinerlei Reaktion vornimmt, wodurch die Reaktion des entsprechenden Limits abgeschaltet werden kann.

Über eine Betätigung des Softkeys "Letztes Ereignis" wird automatisch zu der Schnittnummer zurückgesprungen, bei der zuletzt eine der möglichen Reaktionen aufgetreten ist.

## Patentansprüche

1. Numerische Steuerung für eine Werkzeugmaschine mit digitalen Antrieben, mit
- einem Bedienungsrechnerteil (HMI), der mindestens ein Bedienprogramm enthält und zur Aufnahme weiterer Bedienprogramme offen ist,
- einem Steuerungsrechnerteil (NCK),
- der NC-Programme zur Steuerung einer Werkzeugmaschine enthält, wobei die Bearbeitungsvorgänge in werkzeug- und/oder werkstückspezifische Schnitte unterteilt sind,
der mehrere Standard-NC-Sätze bereithält,
- der mehrere voneinander unabhängige und vom Anwender frei programmierbare NC-Programmanweisungen in einem festen Zeittakt synchron zu der Abarbeitung der NC-Programme auswertet und bei Erfüllung der in den Programmanweisungen enthaltenen Bedingung synchron mindestens einen Befehl abarbeitet, und
- der in dem festen Zeittakt gemessene Werte von Betriebsparametem der digitalen Antriebe mindestens einer angetriebenen Achse oder Spindel von einem oder mehreren Werkzeugen oder Werkstücken für die NC-Programmanweisungen an einer Schnittstelle zur Verfügung stellt,
**dadurch gekennzeichnet,**
**dass** zur Werkzeug- und Prozessüberwachung für mindestens ein überwachtes Werkzeug oder Werkstück ein in den Steuerungsrechnerteil (NCK) eingelesenes Auswerteprogramm ausschließlich eine Kombination von mindestens zwei der frei programmierbaren synchronen NC-Programmanweisungen enthält, die parallel und synchron zu den vorhandenen Standard-NC-Sätzen ausführbar sind.

2. Numerische Steuerung nach Anspruch 1, **dadurch gekennzeichnet, dass** jede der voneinander unabhängigen und von einem Anwender frei programmierbaren NC-Programmanweisung aus einem einzigen Bedingungsteil und einem Ausführungsteil besteht.

3. Numerische Steuerung nach Anspruch 1 oder 2, **dadurch gekennzeichnet, dass** der gemessenene Betriebsparameter das Drehmoment oder die Stromaufnahmewerte des Haupt- oder Vorschubmotorantriebes des Werkzeugs oder Werkstücks und/oder die Vorschubgeschwindigkeit des Werkzeugs oder Werkstücks ist.

4. Numerische Steuerung nach Anspruch 1 bis 3, **dadurch gekennzeichnet, dass** mehrere programmierbaren NC-Programmanweisungen aus den im festen Zeittakt zur Verfügung gestellten Messwerten der Stromaufnahme oder des Drehmomentes der digitalen Antriebe den Maximalwert der Stromaufnahme oder des Drehmomentes ermittelt unter Abzug eines gespeicherten Maximalwertes der Stromaufnahme oder des Drehmomentes, der ohne Werkzeug oder ohne Werkstück gemessen worden ist, und das Resultat mit mindestens einem gespeicherten werkzeug- und/oder schnittspezifischen Grenzwert oder Sollbereich der Stromaufnahme oder des Drehmomentes im festen Zeittakt vergleichen, wobei in Abhängigkeit des Vergleichsergebnisses ein Steuerbefehl, ein Flagsignal oder eine Aktion, z.B. durch einen Standard-NC-Satz, ausführbar ist.

5. Numerische Steuerung nach einem der Ansprüche 1 bis 4, **dadurch gekennzeichnet, dass** der feste Zeittakt der Interpolationstakt ist.

6. Verfahren zur steuerungsintegrierten Überwachung einer Werkzeugmaschine mit digitalen Antrieben und mit einer offenen numerischen Steuerung durch NC-Programme, wobei neben den NC-Programmen mehrere Standard-NC-Sätze und mehrere voneinander unabhängige und vom Anwender frei programmierbare NC-Programmanweisungen bereitgestellt werden, die in einem festen Zeittakt synchron zu der Abarbeitung der NC-Programme ausgewertet werden, wobei bei Erfüllung der in den NC-Programmanweisungen enthaltenen Bedingung mindestens ein Befehl synchron abgearbeitet werden kann, wobei desweiteren gemessene Werte von Betriebsparametern der digitalen Antriebe mindestens einer angetriebenen Achse oder Spindel von einem oder mehreren Werkzeugen oder Werkstücken in dem festen Zeittakt für die NC-Programmanweisungen zur Verfügung gestellt werden,
**gekennzeichnet durch**
dass zur Werkzeug- und Prozessüberwachung eines überwachten Werkzeuges oder Werkstücks ausschließlich eine Kombination von mindestens zwei der frei programmierbaren synchronen NC-Programmanweisungen verwendet werden, die parallel und synchron zu den vorhandenen Standard-NC-Sätzen und den in einem festen Zeittakt ausgelesenen Messwerte der Betriebsparameter der digitalen Antriebe ausgeführt werden.

7. Verfahren nach Anspruch 6, **dadurch gekennzeichnet, dass** mindestens eine der NC-Programmanweisungen zur Definition eines Überwachungsfensters zur Aktivierung der Überwachung verwendet wird.

8. Verfahren nach einem der Ansprüche 6 oder 7, **dadurch gekennzeichnet, dass** die Bearbeitungsvorgänge in werkzeug- und/oder werkstückspezifische Schnitte unterteilt werden und dass mit Hilfe mindestens einer NC-Programmanweisung bei mehreren gleichartigen aufeinanderfolgenden Bearbeitungen durch dasselbe Werkzeug eine automatische Trennung der Überwachung jedes Schnittes desselben Werkzeugs ausgeführt wird.

9. Verfahren nach einem der Ansprüche 6 bis 8, **dadurch gekennzeichnet, dass** die Maximalwerte der Stromaufnahme oder des Drehmomentes der digitalen Antriebe der zu überwachenden Schnitte eines NC-Programms, die ohne Werkzeug oder ohne Werkstück gemessen werden, im Teach-in-Verfahren in einen Speicher des Steuerungsrechnerteils (NCK) eingelesen werden.

10. Verfahren nach Anspruch 9, **dadurch gekennzeichnet, dass** die während der Bearbeitung gemessenen Maximalwerte der Stromaufnahme oder des Drehmomentes der digitalen Antriebe für jeden der zu überwachenden Schnitte eiMusterwerkstücks in einen Speicher des Steuerungsrechnerteils (NCK) eingelesen werden.

11. Verfahren nach Anspruch 10, **dadurch gekennzeichnet, dass** die ohne Werkstück oder Werkzeug gemessenen Maximalwerte von den mit Hilfe des Musterwerkstücks gemessenen Maximalwerten subtrahiert werden und dass die auf diese Weise berechneten Werte als Referenzwerte für die Werkzeug- und Prozessüberwachung zur Festlegung von werkzeug- und/oder schnittspezifischen Grenzwerten oder Sollbereichen der Stromaufnahme oder des Drehmomentes verwendet werden.

12. Verfahren nach Anspruch 11, **dadurch gekennzeichnet, dass** der ohne Werkstück oder Werkzeug gemessene schnittspezifische Maximalwert der Stromaufnahme oder des Drehmomentes eines digitalen Antriebs von den aktuell gemessenen Werten der Stromaufnahme oder des Drehmomentes subtrahiert wird und dass der Differenzwert als Messwert für die Werkzeug- oder Prozessbelastung mit den gespeicherten werkzeug- und/oder schnittspezifischen Grenzwerten oder Sollbereichen verglichen werden.

13. Verfahren nach einem der Ansprüche 6 bis 12, **dadurch gekennzeichnet, dass** als Zeittakt der Interpolationstakt der NC-Programme verwendet wird.

## Claims

1. Numerical control for a machine tool with digital drives, comprising
- an operation calculator part (HMI) including at least one operating program and being open to receive further operating programs,
- a control calculator part (NCK),
- which includes NC programs for controlling a machine tool, the machining processes being divided into sections specific to the tool and/or the work piece,
- which provides several standard NC sets,
- which evaluates a plurality of mutually independent NC program instructions, freely programmable by the user, at a fixed clock pulse synchronously to the execution of the NC programs and synchronously executes at least one instruction if the condition contained in the program instructions is met, and
- which makes available, at an interface, the values of operation parameters of the digital drives of at least one driven axis or spindle of one or a plurality of tools or work pieces, measured at said fixed clock pulse, for the NC program instructions,
**characterized in that**
for monitoring the tool and the process for at least one monitored tool or work piece, an evaluation program read into the control calculator part (NCK) exclusively includes a combination of at least two of the freely programmable synchronous NC program instructions executable in parallel and synchronous to the existing standard NC sets.

2. Numerical control of claim 1, **characterized in that** each of the mutually independent NC program instructions, freely programmable by the user, consists of a single condition part and an execution part.

3. Numerical control of claim 1 or 2, **characterized in that** measured operation parameter are the torque or the current consumption value of the main or feed motor drive of the tool or the work piece and/or the feed rate of the tool or the work piece.

4. Numerical control of claims 1 to 3, **characterized in that** a plurality of programmable NC program instructions determine the maximum value of the current consumption or of the torque from the measured values of the current consumption or of the torque of the digital drives provided at the fixed clock pulse, while subtracting therefrom a stored maximum value of the current consumption or of the torque measured without tool or work piece, and that they compare the result to at least one stored tool- and/or section-specific limit value or target range of the current consumption or of the torque at the fixed clock pulse, a control instruction, a flag signal or an action, e.g. by a standard NC set, being executable as a function of the comparison result.

5. Numerical control of one of claims 1 to 4, **characterized in that** the fixed clock pulse is the interpolation interval.

6. Method for a control integrated monitoring of a machine tool with digital drives and with an open numerical control by NC programs, wherein, besides the NC programs, a plurality of standard NC sets and a plurality of mutually independent NC program instructions, freely programmable by the user, are provided that are evaluated in a fixed clock pulse synchronous to the execution of the NC programs, wherein, if the condition included in the NC program instructions is met, at least one instruction can be executed synchronously, wherein, further, measured values of operation parameters of the digital drives of at least one driven axis or spindle of one or a plurality of tools or work pieces, measured at said fixed clock pulse, are made available for the NC program instructions,
**characterized in that**
for monitoring the tool and the process of one monitored tool or work piece, a combination of at least two of the freely programmable synchronous NC programs are used exclusively, which are executed in parallel and synchronous to the existing standard NC sets and the measured values of the operation parameters of the digital drives read out at a fixed clock pulse.

7. Method of claim 6, **characterized in that** at least one of the NC program instructions is used to define a monitoring window for activating the monitoring.

8. Method of one of claims 6 or 7, **characterized in that** the machining processes are divided into sections specific to the tool and/or the work piece and that, using at least one NC program instruction, an automatic separation of the monitoring of each section of the same tool is performed in case of several similar successive machining operations by the same tool.

9. Method of one of claims 6 to 8, **characterized in that** the maximum values of the current consumption or of the torque of the digital drives of the sections of a NC program to be monitored, which are measured without tool or work piece, are read into a memory of the control calculator part (NCK) following the Teach-In method.

10. Method of claim 9, **characterized in that** the maximum values of the current consumption or of the torque of the digital drives are read into a memory of the control calculator part (NCK) for each of the sections of a model work piece to be monitored.

11. Method of claim 10, **characterized in that** the maximum values measured without tool or work piece are subtracted from the maximum values measured using the model work piece and that the values thus calculated are used as reference values for the tool and process monitoring for setting tool- and/or section-specific limit values or target ranges of the current consumption or of the torque.

12. Method of claim 11, **characterized in that** the section-specific maximum value of the current consumption or of the torque of a digital drive, measured without work piece or tool, is subtracted from the presently measured values of the current consumption or of the torque and that the differential value as a measured value for the tool or process load is compared to the stored tool- and/or section-specific limit values or target ranges.

13. Method of one of claims 6 to 12, **characterized in that** the interpolation interval of the NC programs is used as the clock pulse.

## Revendications

1. Commande numérique pour machine-outil à entraînements numériques, laquelle commande numérique comprend
- une partie ordinateur de conduite (HMI) qui contient au moins un programme de conduite et qui est ouverte pour recevoir d'autres programmes de conduite,
- une partie ordinateur de commande (NCK),
- qui contient des programmes NC (commande numérique) destinés à commander une machine-outil, les processus de traitement étant divisés en passes d'usinage spécifiques à l'outil et/ou en passes d'usinage spécifiques à la pièce,
- qui tient à disposition plusieurs ensembles NC standard,
- qui exploite plusieurs instructions de programme NC indépendantes les unes des autres et librement programmables par l'utilisateur selon une cadence d'horloge fixe de façon synchrone avec le traitement du programme NC et traite de façon synchrone au moins un ordre lorsque la condition contenue dans les instructions de programme est remplie, et
- qui met à disposition, au niveau d'une interface, des valeurs, mesurées en la cadence d'horloge fixe, de paramètres de fonctionnement des entraînements numériques d'au moins un axe ou une broche entraîné d'un ou plusieurs outils ou pièces pour les instructions de programme NC,
**caractérisée en ce que**
pour surveiller l'outil et le processus d'au moins un outil ou une pièce surveillé, un programme d'exploitation lu dans la partie ordinateur de commande (NCK) contient exclusivement une combinaison d'au moins deux des instructions de programme NC synchrones librement programmables qui peuvent être exécutées en parallèle et de façon synchrone avec les ensembles NC standard existants.

2. Commande numérique selon la revendication 1, **caractérisée en ce que** chaque instruction de programme NC, indépendante des autres et librement programmable par un utilisateur, est constituée d'une seule partie de condition et d'une partie d'exécution.

3. Commande numérique selon la revendication 1 ou 2, **caractérisée en ce que** le paramètre de fonctionnement mesuré est le couple de rotation ou les valeurs d'absorption de courant de l'entraînement de moteur principal ou d'avancement de l'outil ou de la pièce et/ou la vitesse d'avancement de l'outil ou de la pièce.

4. Commande numérique selon revendication 1 à 3, **caractérisée en ce que** plusieurs instructions de programme NC programmables déterminent la valeur maximale de l'absorption de courant ou du couple de rotation à partir des valeurs de mesure, délivrées avec une cadence d'horloge fixe, de l'absorption de courant ou du couple de rotation des entraînements numériques en déduisant une valeur maximale en mémoire de l'absorption de courant ou du couple de rotation qui a été mesurée sans outil ou sans pièce, et **en ce qu'**elles comparent le résultat, selon la cadence d'horloge fixe, à au moins une valeur limite spécifique de l'outil et/ou de la passe d'usinage ou à une plage de consigne de l'absorption de courant ou du couple de rotation en mémoire, un ordre de commande, un signal de drapeau ou une action, étant exécuté en fonction du résultat de la comparaison, par exemple par un ensemble NC standard.

5. Commande numérique selon l'une des revendications 1 à 4, **caractérisée en ce que** la cadence d'horloge fixe est la cadence d'interpolation.

6. Procédé de surveillance à commande intégrée d'une machine-outil à entraînements numériques et à commande numérique ouverte au moyen de programmes NC, dans lequel, en plus des programmes NC, plusieurs ensembles NC standards et plusieurs instructions de programme NC, indépendantes les unes des autres et librement programmables par un utilisateur sont mis à disposition, lesquels ensembles et instructions sont exploités, selon une cadence d'horloge fixe, de façon synchrone avec le traitement des programmes NC, au moins un ordre pouvant être traité de façon synchrone lorsque la condition contenue dans les instructions de programmes NC est remplie et en outre des valeurs mesurées de paramètres de fonctionnement des entraînements numériques d'au moins un axe ou une broche entraîné d'un ou de plusieurs outils ou pièces étant mises à disposition, selon la cadence d'horloge fixe, pour les instructions de programme NC,
**caractérisé en ce que**
pour la surveillance de l'outil et du processus d'au moins un outil ou une pièce surveillé, on utilise exclusivement une combinaison d'au moins deux des instructions de programme NC synchrones librement programmables qui sont exécutées en parallèle et de façon synchrone avec les ensembles NC standard existants et les valeurs de mesure, lues en une cadence d'horloge fixe, des paramètres de fonctionnement des entraînements numériques.

7. Procédé selon la revendication 6, **caractérisé en ce que** au moins une des instructions de programme NC est utilisée pour la définition d'une fenêtre de surveillance pour activer la surveillance.

8. Procédé selon l'une des revendications 6 ou 7, **caractérisé en ce que** les processus de traitement sont divisés en passes d'usinage spécifiques d'outil et/ou en passes d'usinage spécifiques de pièce, et **en ce que**, à l'aide d'au moins une instruction de programme NC, lorsque plusieurs traitements successifs de même type sont effectués par le même outil, une séparation automatique de la surveillance de chaque passe d'usinage de ce même outil est exécutée.

9. Procédé selon l'une des revendications 6 à 8, **caractérisé en ce que** les valeurs maximales de l'absorption de courant ou du couple de rotation des entraînements numériques des passes d'usinage à surveiller d'un programme NC qui sont mesurées sans outil ou sans pièce, sont mémorisées dans une mémoire de la partie ordinateur de commande (NCK) lors d'un processus d'apprentissage.

10. Procédé selon la revendication 9, **caractérisé en ce que** les Valeurs maximales, mesurées pendant le traitement, de l'absorption de courant ou du couple de rotation des entraînements numériques pour chacune des passes d'usinage à surveiller d'une pièce échantillon sont mémorisées dans une mémoire de la partie ordinateur de commande (NCK).

11. Procédé selon la revendication 10, **caractérisé en ce que** les valeurs maximales mesurées sans outil ou sans pièce sont soustraites des valeurs maximales mesurées à l'aide de la pièce échantillon et **en ce que** les valeurs ainsi calculées sont utilisées comme valeurs de référence pour la surveillance d'outil et de processus afin de déterminer des valeurs limites ou des plages de consigne, spécifiques à l'outil et/ou à la passe d'usinage, de l'absorption de courant ou du couple de rotation.

12. Procédé selon la revendication 11, **caractérisé en ce que** la valeur maximale spécifique de la passe d'usinage, mesurée sans outil ou sans pièce, de l'absorption de courant ou du couple de rotation d'un entraînement numérique est soustraite des valeurs actuellement mesurées de l'absorption de courant ou du couple de rotation et **en ce que** la valeur de différence en tant que valeur de mesure de la charge de l'outil ou du processus est comparée à des valeurs limites ou des plages de consigne, spécifiques à l'outil et/ou à la passe d'usinage, en mémoire.

13. Procédé selon l'une des revendications 6 à 12, **caractérisé en ce qu'**est utilisée comme cadence d'horloge la cadence d'interpolation des programmes NC.
